# EUROPEAN PATENT APPLICATION

(11) **EP 4 424 555 A1**
(43) Date of publication of application: **04.09.2024**
(21) Application number: 22885404.8
(22) Date of filing: 01.09.2022
(51) Int. Cl.: B60N 2/75

(54) **CONTROL METHOD AND CONTROL DEVICE FOR ELECTRICALLY ADJUSTING SEAT ARMREST, AND SEAT**

(30) Priority: 29.10.2021 CN 202111267832
(71) Applicant: Yanfeng International Automotive Technology Co., Ltd., Shanghai 201306 (CN)
(72) Inventor: LI, Junjie, Shanghai 201306 (CN); DU, Weiyao, Shanghai 201306 (CN); HUANG, Yuqing, Shanghai 201306 (CN); WANG, Yang, Shanghai 201306 (CN); LU, Zhenyu, Shanghai 201306 (CN)
(74) Representative: Colombo, Stefano Paolo
(86) International application number: PCT/CN2022/116398
(87) International publication number: WO 2023/071513

(57) **Abstract**

The present invention relates to a control method for electrically adjusting a seat armrest for an angle control of the seat armrest. The control method comprises: providing a seat (100), wherein the seat has a seat cushion (110) with an electrically adjustable angle, and an outer armrest (300) which is coupled with the seat cushion (110) and is arranged on one side proximate to a vehicle door and/or an inner armrest (200) which is coupled with the seat cushion (110) and is arranged on one side remote from the vehicle door; and providing a control device, wherein the controller receives a trigger signal, performs determination on the basis of the received trigger signal, and sends, according to a determination result, an instruction signal to an inner electric motor for driving the inner armrest (200) and/or an outer electric motor for driving the outer armrest (300), so as to drive the inner armrest (200) or the outer armrest (300) to turn over individually, or drive the inner armrest and the outer armrest to turn over simultaneously. The present invention further relates to a seat and a control device. By means of the method, different requirements for armrest angles in different seat states can be met.

## Description

### TECHNICAL FIELD

The present invention relates to the technical field of a seat, in particular relates to a control method and a control device for electrically adjusting a seat armrest, and relates to a seat, especially a vehicle seat, such as an automobile seat.

### BACKGROUND OF INVENTION

With the development of vehicle technology, requirements for the comfort of a vehicle seat, such as a second-row Captain Chair for a seven-seat SUV or BMPV, become higher and higher. The concepts of operation modes related to a seat, such as "zero pressure", "zero-gravity", "welcome", "see-off" and "work / entertainment", enter into users' view field more and more deeply. In different operation modes of a vehicle seat, a posture of a passenger may change with a change of a tilt angle of a seat cushion and a backrest. At present, there are two common Captain Chairs with an armrest in the market: - one of the chairs includes a large armrest mounted to a seat cushion, wherein the large armrest provides a passenger with a favorable sense of embrace, but a height of the large armrest can't be adjusted, and a length of the large armrest might not be sufficient when a backrest is laid down, so that the elbow of the passenger can't be supported on the large armrest; - the other chair includes a small armrest mounted to a backrest, wherein the small armrest is manually rotatable around a fixed axle, but is adjustable within a limited range only, and the arm of the passenger can't be comfortably placed on the small armrest due to gravity when a backrest is inclined in a large angle, and meanwhile, the small armrest has a limited sense of embrace for the passenger's body.

In addition, these known armrests are generally adjustable manually only, and aren't adjustable between various operation modes such as a welcome mode, a see-off mode, a horizontal holding mode, a joint adjustment mode and a single-sided adjustment mode, in dependence on a change of a seat position and an operation mode according to an external signal.

### SUMMARY OF INVENTION

An object of the present invention is to provide a control method for electrically adjusting a seat armrest in view of the defects of existing seat armrests, so as to satisfy different requirements for armrest angles in different seat states. For example, by way of the control method, the seat armrest may be moved jointly with a seat cushion.

In order to achieve the above-mentioned object, the present invention provides a control method for electrically adjusting a seat armrest for an angle control of the seat armrest, wherein the control method comprises:
- providing a seat, especially a vehicle seat, such as an automobile seat, wherein the seat has a seat cushion with an electrically adjustable angle, and the seat has an outer armrest which is coupled with the seat cushion and is arranged on one side proximate to a vehicle door and/or an inner armrest which is coupled with the seat cushion and is arranged on one side remote from the vehicle door;
- providing a control device, wherein the controller receives a trigger signal, determines on the basis of the trigger signal whether an angular position of the inner armrest and/or the outer armrest should be changed, and sends, according to a positive determination result, an instruction signal to an inner electric motor for driving the inner armrest and/or an outer electric motor for driving the outer armrest, so as to drive the inner armrest and/or the outer armrest to turn over, especially to realize that the inner armrest or the outer armrest is driven to turn over individually or the inner armrest and the outer armrest are driven to turn over simultaneously.

In one preferred embodiment of the present invention, the trigger signal includes at least one of the following signals: a vehicle door outside opening signal, a vehicle door inside opening signal, a seat cushion angle adjustment signal, an outer armrest angle adjustment signal, an inner armrest angle adjustment signal, an armrest angle joint adjustment signal, an SBR (Safety Belt Reminder) sensor signal, a safety belt latch sensor signal and a seat position signal. Here, the term "vehicle door outside opening signal" means a signal to instruct to open a vehicle door from outside the vehicle door, the term "vehicle door inside opening signal" means a signal to instruct to open a vehicle door from inside the vehicle door, the term "outer armrest angle adjustment signal" means a signal to instruct to adjust an angle of an outer armrest, the term "inner armrest angle adjustment signal" means a signal to instruct to adjust an angle of an inner armrest, and the term "armrest angle joint adjustment signal" means a signal to instruct to adjust angles of both an inner armrest and an outer armrest simultaneously.

In one preferred embodiment of the present invention, the control method is implemented to realize a welcome mode of an automobile seat armrest, comprising the following steps:
Step 1: the control device receives a vehicle door outside opening signal, and then determines whether there is currently a passenger on the automobile seat, preferably by identifying an SBR sensor signal and a safety belt latch sensor signal;
Step 2: if the control device determines that there is currently a passenger on the automobile seat, preferably according to the SBR sensor signal and the seatbelt latch sensor signal, the process is ended; and if the control device determines that there is currently no passenger on the automobile seat, the control device identifies a seat position signal to determine whether the automobile seat is currently in an initial position;
Step 3: if the control device determines that the automobile seat is currently not in the initial position according to the seat position signal, the control device sends an instruction signal to an electric motor for driving the automobile seat, so as to drive and adjust the automobile seat to the initial position;
Step 4: the control device sends an instruction signal to an outer electric motor, so that the outer electric motor drives the outer armrest to turn over from the initial position of the outer armrest to a set position, and the control device identifies that the outer armrest reaches the set position, and then determines whether there is currently a passenger on the automobile seat again, preferably by recognizing the SBR sensor signal and the seatbelt latch sensor signal;
Step 5: if the control device determines that there is currently no passenger on the automobile seat, the control device doesn't send an instruction signal, so that the outer armrest is held in the set position to wait for a passenger to get on; and if the control device determines that there is currently a passenger on the automobile seat, the control device sends an instruction signal to the outer electric motor, so that the outer electric motor drives the outer armrest to return to the initial position, and the process is ended.

In one preferred embodiment of the present invention, in Step 5, before a passenger gets on, preferably wherein the control device identifies the SBR sensor signal and the seatbelt latch sensor signal in real time, if a waiting time for a passenger to get on exceeds a set time, the control device sends an instruction signal to the outer electric motor, so that the outer electric motor drives the outer armrest back to the initial position, and the process is ended; and if the waiting time for the passenger to get on doesn't exceed the set time, but the control device receives a door closing signal, the control device sends an instruction signal to the outer electric motor, so that the outer electric motor drives the outer armrest back to the initial position, and the process is ended.

In one preferred embodiment of the present invention, the control method is implemented to realize a see-off mode of an automobile seat armrest, comprising the following steps:
Step A: the control device receives a vehicle door inside opening signal, and then determines whether there is currently a passenger on the automobile seat, preferably by identifying an SBR sensor signal and a safety belt latch sensor signal;
Step B: if the control device determines that there is currently no passenger on the automobile seat, preferably according to the SBR sensor signal and the seatbelt latch sensor signal, the process is ended; and if the control device determines that there is currently a passenger on the automobile seat, the control device identifies a seat position signal to determine whether the automobile seat is currently in an initial position;
Step C: if the control device determines that the automobile seat is currently not in the initial position according to the seat position signal, the control device sends an instruction signal to an electric motor for driving the automobile seat, so as to drive and adjust the automobile seat to the initial position;
Step D: the control device sends an instruction signal to the outer electric motor, so that the outer electric motor drives the outer armrest to turn over from the initial position of the outer armrest to a set position, and the control device identifies that the outer armrest reaches the set position, and then determines whether there is currently a passenger on the automobile seat again, preferably by recognizing the SBR sensor signal and the seatbelt latch sensor signal;
Step E: if the control device determines that there is currently a passenger on the automobile seat, the control device doesn't send an instruction signal, so that the outer armrest is held in the set position to wait for a passenger to get off; and if the control device determines that there is currently no passenger on the automobile seat, the control device sends an instruction signal to the outer electric motor, so that the outer electric motor drives the outer armrest back to the initial position, and the process is ended.

In one preferred embodiment of the present invention, in Step E, before a passenger gets off, preferably wherein the control device identifies the SBR sensor signal and the seatbelt latch sensor signal in real time, if a waiting time for a passenger to get off exceeds a set time, the control device sends an instruction signal to the outer electric motor, so that the outer electric motor drives the outer armrest back to the initial position, and the process is ended; and if the waiting time for the passenger to get off doesn't exceed the set time, but the control device receives a door closing signal, the control device sends an instruction signal to the outer electric motor, so that the outer electric motor drives the outer armrest back to the initial position, and the process is ended.

In one preferred embodiment of the present invention, the seat comprises a seat cushion, a backrest, an inner armrest and an outer armrest.

In one preferred embodiment of the present invention, the initial position of the seat includes a horizontal position of the outer armrest.

In one preferred embodiment of the present invention, the set position is set, so that the outer armrest defines an angle in a range of 90° to 120° relative to a horizontal plane in the set position.

In one preferred embodiment of the present invention, the set time is in a range of 30s to 60s.

In one preferred embodiment of the present invention, the control method is implemented to realize a single armrest angle adjustment, wherein:
(1) the control device receives an angle adjustment signal for the outer armrest, and then sends an instruction signal to the outer electric motor, so that the outer electric motor drives the outer armrest to turn over between a first position and a second position of the outer armrest; or
(2) the control device receives an angle adjustment signal for the inner armrest, and then sends an instruction signal to the inner electric motor, so that the inner electric motor drives the inner armrest to turn over between a first position and a second position of the inner armrest.

In one preferred embodiment of the present invention, the first position of the outer armrest is set, so that the outer armrest is inclined upward, preferably wherein an angle between the outer armrest and a horizontal plane is 90° to 120° in the first position; and/or the second position of the outer armrest is set, so that the outer armrest is inclined downward, preferably wherein an angle between the outer armrest and a horizontal plane is 15° in the second position.

In one preferred embodiment of the present invention, the first position of the inner armrest is set, so that the inner armrest is inclined upward, preferably wherein an angle between the inner armrest and a horizontal plane is 5° in the first position; and/or the second position of the inner armrest is set, so that the inner armrest is inclined downward, preferably wherein an angle between the inner armrest and a horizontal plane is 15° in the second position.

In one preferred embodiment of the present invention, the control method is implemented to realize an armrest angle joint adjustment, wherein the control device receives an armrest angle joint adjustment signal, and then sends an instruction signal to the outer electric motor and the inner electric motor simultaneously, so that the inner electric motor and the outer electric motor respectively drive the inner armrest and the outer armrest to turn over and stop synchronously.

In one preferred embodiment of the present invention, the control method is implemented to realize a horizontal mode of the seat armrest, comprising the following step:
the control device receive an adjustment signal for a seat cushion angle, and then identifies a change of the seat cushion angle, so that if the change of the seat cushion angle is less than a set angle, the process is ended; and if the change of the seat cushion angle is greater than the set angle, the control device sends an instruction signal to the outer electric motor and/or the inner electric motor, so that the outer electric motor and/or the inner electric motor respectively drive the outer armrest and/or the inner armrest to turn over to a horizontal position.

In one preferred embodiment of the present invention, the set angle is 2°.

Another aspect of the present invention relates to a seat, especially a vehicle seat, such as an automobile seat, which has a seat cushion with an electrically adjustable angle, wherein the seat further comprises:
- an outer armrest and an outer electric motor for driving the outer armrest, wherein the outer armrest is coupled with the seat cushion, has an electrically adjustable angle relative to the seat cushion and is arranged on one side proximate to a vehicle door; and/or
- an inner armrest and an inner electric motor for driving the inner armrest, wherein the inner armrest is coupled with the seat cushion, has an electrically adjustable angle relative to the seat cushion and is arranged on one side remote from the vehicle door; and
- a control device configured to implement the control method for electrically adjusting a seat armrest according to the present invention.

Another aspect of the present invention relates to a control device comprising a nonvolatile memory, on which control instructions are stored, which are configured to implement the control method for electrically adjusting a seat armrest according to the present invention when the control instructions are executed in the control device.

A further aspect of the present invention relates to a vehicle, such as a passenger vehicle, which comprises the seat according to the present invention.

In one preferred embodiment of the present invention, the control device is in signal connection with an ECU of the vehicle, or the control device is configured as a part of an ECU of the vehicle.

In some embodiments, the control method according to the present invention may have a part or all of the following advantages:
1. During an adjusting process of a seat cushion angle of a seat, an inner armrest and/or an outer armrest may move together with a seat cushion, and meanwhile, an inner electric motor for the inner armrest and/or an outer electric motor for the outer armrest drive the inner armrest and/or the outer armrest to turn over respectively, so that the inner armrest and/or the outer armrest are always kept in a horizontal position, and thus a proper angle and a proper support range are set for the inner armrest and/or the outer armrest, and the comfort of the respective armrests is improved.
2. In a welcome mode and in a see-off mode, the outer armrest may be lifted up to an angle of 90° - 120° relative to a horizontal plane, which is convenient for a passenger to enter the vehicle and sit on the vehicle seat or leave the vehicle seat.
3. The inner armrest and the outer armrest may be adjusted separately or in combination.

The technical features mentioned above, the technical features to be mentioned below and the technical features solely shown in the accompanying drawings may be arbitrarily combined with each other, as long as the combined technical features are not mutually contradictory. All the feasible feature combinations are the technical contents specifically recited herein. Any of a plurality of sub-features contained in the same sentence may be applied individually, rather than necessarily together with the other sub-features.

### BRIEF DESCRIPTION OF DRAWINGS

Now the present invention will be described in more detail by way of exemplary embodiments with reference to accompanying schematic drawings.
Fig. 1 is a flow chart of a control method for realizing a welcome mode of an outer armrest according to Embodiment 1 of the present invention.
Fig. 2 is a schematic state view of a vehicle seat in an intermediate position different from an initial position, which is applied in the control method according to Embodiment 1 of the present invention.
Fig. 3 is a schematic state view of the seat of Fig. 2 in the initial position.
Fig. 4 is a schematic state view of the seat of Fig. 2, wherein the outer armrest is in a welcome position.
Fig. 5 is a flow chart of a control method for realizing a see-off mode of an outer armrest according to Embodiment 2 of the present invention.
Fig. 6 is a schematic state view of a vehicle seat in a seated position, which is applied in the control method according to Embodiment 2 of the present invention.
Fig. 7 is a schematic state view of the seat of Fig. 6 in an initial position.
Fig. 8 is a schematic state view of the seat of Fig. 6, wherein the outer armrest is in a see-off position.
Fig. 9 is a flow chart of a control method for realizing a horizontal mode of a vehicle seat armrest according to Embodiment 3 of the present invention.
Fig. 10 is a schematic state view of the vehicle seat in an initial position, which is applied in the control method according to Embodiment 3 of the present invention, wherein both the outer armrest and the inner armrest are in a horizontal position.
Fig. 11 is a schematic state view of the vehicle seat of Fig. 10, wherein a front end of a seat cushion is lifted up, and both the outer armrest and the inner armrest are in a horizontal position.
Fig. 12 is a schematic state view of the vehicle seat of Fig. 10 in a zero-gravity position, wherein both the outer armrest and the inner armrest are in a horizontal position, wherein the front end of the seat cushion is further lifted up in comparison with the situation in Fig. 11.
Fig. 13 is a schematic state view of a seat, wherein an armrest angle joint adjustment is performed on an outer armrest and an inner armrest according to Embodiment 4 of the present invention.
Fig. 14 is a schematic state view of a seat, which is applied in a control method for realizing a single armrest angle adjustment according to Embodiment 5 of the present invention, wherein an outer armrest and an inner armrest are respectively adjusted from an initial position of the outer armrest and an initial position of the inner armrest to a position of -15° relative to a horizontal plane.
Fig. 15 is a schematic state view of the seat of Fig. 14, wherein both the outer armrest and the inner armrest are in an initial position.
Fig. 16 is a schematic state view of the seat of Fig. 14, wherein the outer armrest is adjusted from its initial position to a position of 45° and the inner armrest is still in the initial position.
Fig. 17 is a schematic state view of the seat of Fig. 14, wherein the outer armrest is adjusted from its initial position to a position of 90° and the inner armrest is still in the initial position.

### EMBODIMENTS

The present invention will be described in more detail in conjunction with the accompanying drawings and specific embodiments.

The present invention provides a control method for electrically adjusting a seat armrest angle for an angle control of a seat armrest. In this control method, a seat 100 may be applied, which may be, for example, a second-row seat of an automobile. The seat 100 has a seat cushion 110 with an electrically adjustable angle and a backrest 120, an outer armrest 300 which is coupled with the seat cushion and is arranged on one side proximate to a vehicle door and an inner armrest 200 which is coupled with the seat cushion and is arranged on one side remote from the vehicle door; and a control device not shown. The control device may be mounted in a vehicle as a separate control unit, or may be a part of a vehicle controller. The seat 100 may be a seat arranged in a second seat bank of the vehicle. Of course, the seat is not limited thereto, and the seat 100 may also be another seat, such as a front passenger seat.

After receiving a trigger signal, the control device determines whether an angular position of the inner armrest 200 and/or the outer armrest 300 should be changed on the basis of the trigger signal, and sends an instruction signal to an inner electric motor for driving the inner armrest 200 and/or an outer electric motor for driving the outer armrest 300 according to a positive determination result, so as to:
- drive the inner armrest 200 or the outer armrest 300 to turn over individually; or
- drive the inner armrest 200 and the outer armrest 300 to turn over simultaneously.

The above-mentioned trigger signal may include at least one of the following signals: a vehicle door outside opening signal, a vehicle door inside opening signal, a seat cushion angle adjustment signal, an outer armrest angle adjustment signal, an inner armrest angle adjustment signal, an armrest angle joint adjustment signal, a SBR sensor signal, a safety belt latch sensor signal and a seat position signal.

The above-mentioned control method for electrically adjusting an angle of an armrest may be implemented to realize a welcome mode of an automobile seat armrest, a see-off mode of an automobile seat armrest, an angle adjustment mode of a one-side armrest and a horizontal mode of an automobile seat armrest. Applications of the control method according to the present invention are described in more detail below by way of various embodiments.

### Embodiment 1

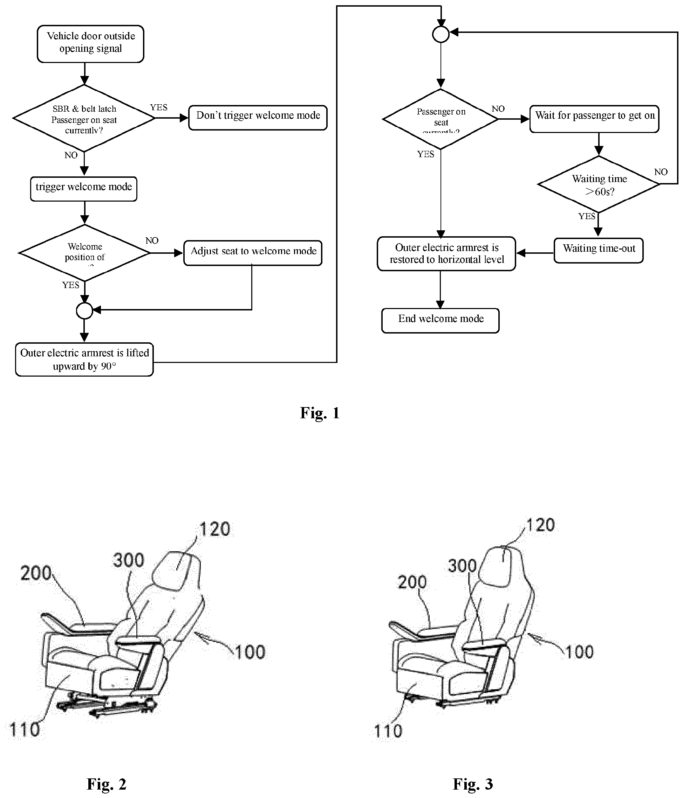

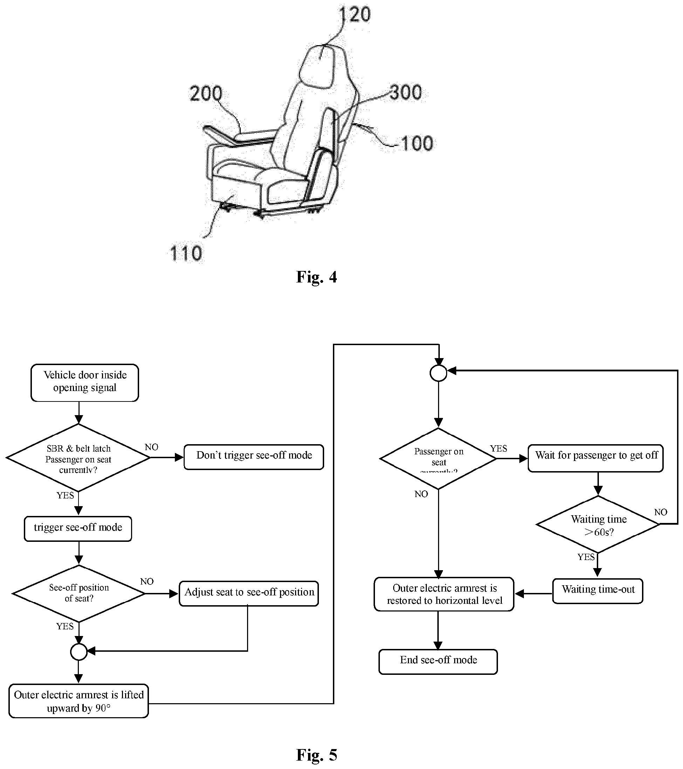

Referring to Figs. 1 to 4, wherein Fig. 1 is a flow chart of a control method according to the present invention, which is implemented to realize a welcome mode of a seat armrest (in particular an outer armrest 300) of an automobile seat, and Figs. 2 to 4 are schematic views of different states of the automobile seat applied in the control method. The control method comprises the following steps:
Step 1: the control device receives a vehicle door outside opening signal, and then identifies a SBR sensor signal and a safety belt latch sensor signal to determine whether there is currently a passenger on the automobile seat 100. Additionally or alternatively thereto, the control device may determine whether there is currently a passenger on the automobile seat 100 by means of a camera system and the image recognition technology.
Step 2: if the control device determines that there is currently a passenger on the automobile seat 100 according to the SBR sensor signal and the safety belt latch sensor signal, the process is ended; and if the control device determines that there is currently no passenger on the automobile seat 100 according to the SBR sensor signal and the safety belt latch sensor signal, the control device identifies a seat position signal to determine whether the automobile seat 100 is in an initial position as shown in Fig. 3.
Step 3: if the control device determines that the automobile seat 100 is currently not in the initial position as shown in Fig. 3 according to the seat position signal (for example, the automobile seat 100 is currently in an intermediate position as shown in Fig. 2), the control device sends an instruction signal to an electric motor for driving the automobile seat 100, so as to drive and adjust the automobile seat 100 from the intermediate position as shown in Fig. 2 to the initial position as shown in Fig. 3, and then Step 4 is taken; and if the control device determines that the automobile seat 100 is currently in the initial position as shown in Fig. 3, Step 4 is directly taken. Here, as an example, in the initial position as shown in Fig. 3, the seat cushion 110, the inner armrest 200 and the outer armrest 300 are all in a horizontal position, and the backrest 120 is substantially in an upright position.
Step 4: the control device sends an instruction signal to an outer electric motor, so that the outer electric motor drives the outer armrest 300 to turn over from the initial position as shown in Fig. 3 to a set position as shown in Fig. 4, that is, a welcome position. Here, the set position as shown in Fig. 4 may have an angular difference of 90° to 120°, preferably 90°, relative to the initial position as shown in Fig. 3. After identifying that the outer armrest 300 reaches the set position as shown in Fig. 4, the control device identifies the SBR sensor signal and the seatbelt latch sensor signal again, in order to determine whether there is currently a passenger on the automobile seat 100.
Step 5: if the control device determines that there is currently no passenger on the automobile seat 100, the control device doesn't send an instruction signal, so that the outer armrest 300 is held in the set position as shown in Fig. 4, so as to wait for a passenger to get on; if the control device determines that there is currenttly a passenger on the automobile seat 100, the control device sends an instruction signal to the outer electric motor, so that the outer electric motor drives the outer armrest 300 back to the initial position as shown in Fig. 3, and the process is ended.

Preferably, in step 5, the control device identifies the SBR sensor signal and the safety belt latch sensor signal in real time before a passenger gets on the vehicle. If a waiting time for a passenger to get on exceeds a set time, for example, 30s to 60s (60s in Fig. 1), the control device sends an instruction signal to the outer electric motor, so that the outer electric motor drives the outer armrest 300 back to the initial position as shown in Fig. 3, and the process is ended. If the waiting time for the passenger to get on doesn't exceed the set time, for example, 30s to 60s, but the control device receives a door closing signal, the control device sends an instruction signal to the outer electric motor, so that the outer electric motor drives the outer armrest 300 to return to the initial position as shown in Fig. 3, and the process is ended.

### Embodiment 2

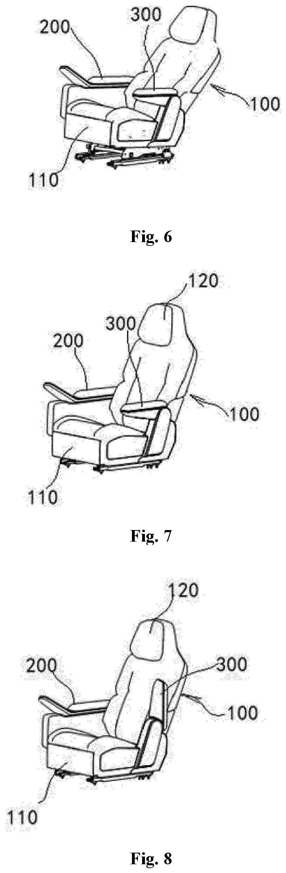

Referring to Figs. 5 to 8, wherein Fig. 5 is a flow chart of a control method for realizing a see-off mode of a seat armrest of an automobile seat, and Figs. 6 to 8 are schematic views of different states of the automobile seat applied in the control method. The control method comprises the following steps:
Step A: after receiving a vehicle door inside opening signal, the control device identifies an SBR sensor signal and a safety belt latch sensor signal to determine whether there is currently a passenger on the automobile seat 100.
Step B: if the control device determines that there is currently no passenger on the automobile seat 100 according to the SBR sensor signal and the safety belt latch sensor signal, the process is ended; and if the control device determines that there is currently a passenger on the automobile seat 100 according to the SBR sensor signal and the safety belt latch sensor signal, the control device identifies a seat position signal to determine whether the automobile seat is currently in an initial position (shown in Fig. 7).
Step C: if the control device determines that the automobile seat 100 is currently not in the initial position as shown in Fig. 7 according to the seat position signal (for example, the automobile seat 100 is currently in a seated position different from the initial position, as shown in Fig. 6), the control device sends an instruction signal to an electric motor for driving the automobile seat 100 to drive and adjust the automobile seat 100 from the seated position as shown in Fig. 6 to the initial position as shown in Fig. 7, and then Step D is taken; and if the control device determines that the automobile seat 100 is currently in the initial position as shown in Fig. 7, Step D is directly taken. Here, as an example, in the initial position as shown in Fig. 7, the seat cushion 110, the inner armrest 200 and the outer armrest 300 are all in a horizontal position, and the backrest 120 is substantially in an upright position.
Step D: the control device sends an instruction signal to an outer electric motor, so that the outer electric motor drives the outer armrest 300 to turn over from the initial position as shown in Fig. 7 to a set position as shown in Fig. 8, that is, a see-off position (here, the see-off position as shown in Fig. 8 may have an angular difference of 90° to 120°, preferably 90°, relative to the initial position as shown in Fig. 7). The control device identifies the SBR sensor signal and the seatbelt latch sensor signal again after identifying that the outer armrest 300 reaches the set position as shown in Fig. 8, so as to determine whether there is currently a passenger on the automobile seat 100.
Step E: if the control device determines that there is currently a passenger on the automobile seat 100, the control device doesn't send an instruction signal, so that the outer armrest 300 is held in the set position as shown in Fig. 8, so as to wait for a passenger to get off; and if the control device determines that there is currently no passenger on the automobile seat 100, the control device sends an instruction signal to the outer electric motor, so that the outer electric motor drives the outer armrest 300 back to the initial position as shown in Fig. 7, and the process is ended.

Preferably, in Step E, before a passenger gets off, the control device identifies the SBR sensor signal and the safety belt latch sensor signal in real time. If a waiting time for a passenger to get off exceeds a set time, for example, 30s to 60s (60s in Fig. 5), the control device sends an instruction signal to the outer electric motor, so that the outer electric motor drives the outer armrest 300 back to the initial position as shown in Fig. 7, and the process is ended. If the waiting time for the passenger to get off doesn't exceed the set time, but the control device receives a door closing signal, the control device sends an instruction signal to the outer electric motor, so that the outer electric motor drives the outer armrest back to the initial position as shown in Fig. 7, and the process is ended.

### Embodiment 3

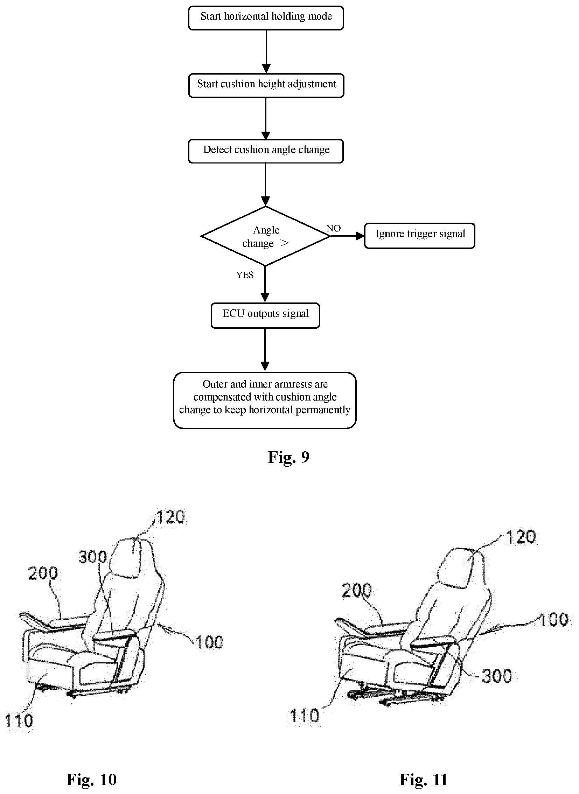

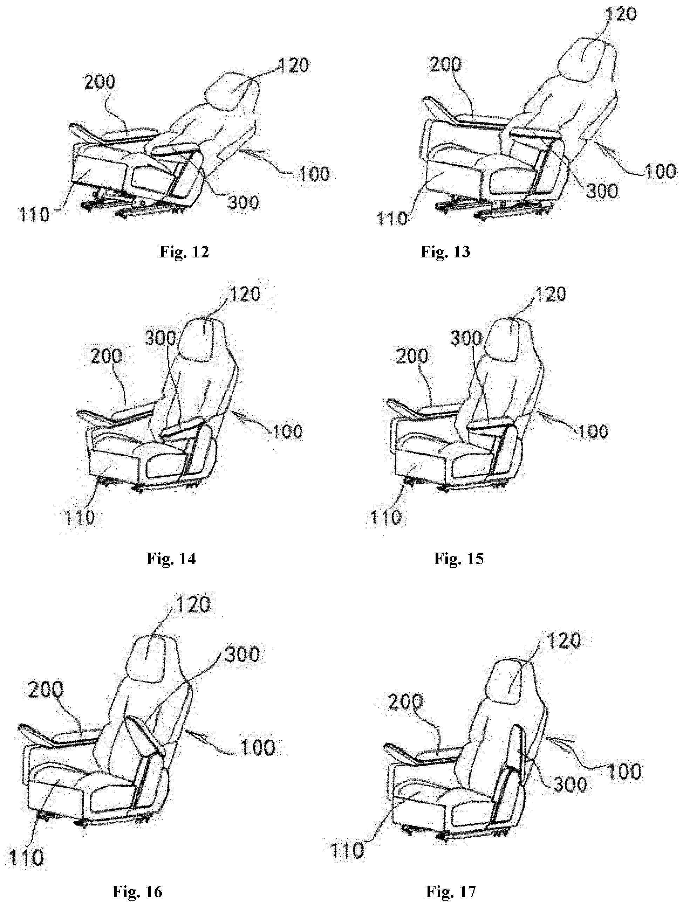

Referring to Figs. 9 to 12, wherein Fig. 9 is a flow chart of a control method for realizing a horizontal mode of a seat armrest of an automobile seat, and Figs. 10 to 12 are schematic views of different states of the automobile seat applied in the control method. The control method comprises the following steps:
Step I: a seat cushion angle adjustment of an automobile seat is started, so that the seat 100 exemplarily starts from an initial position as shown in Fig. 10, via an intermediate position as shown in Fig. 11 (a front end of the seat cushion 110 is lifted to a certain extent), up to a zero-gravity position as shown in Fig. 12 (at this time, the automobile seat 100, especially the backrest 120, has a backward tilt angle adjusted as far as possible, so that a user can lie on the automobile seat 100 and have a rest). Of course, the position adjustment of the automobile seat is not limited thereto, and other position adjustments of the automobile seat 100 are also possible. Then, Step II is taken.
Step II, a seat position detection device detects an angle change of the automobile seat 100, especially an angle change of the seat cushion 110. If the angle change of the automobile seat 100, especially the angle change of the seat cushion 110, is less than a preset angle threshold, for example 2° (of course, the angle threshold is not limited to the value of 2°, and other angle thresholds may be set, if necessary), the control device does not output a control signal, and the process is ended. If the angle change of the automobile seat 100, especially the angle change of the seat cushion 110, is greater than the preset angle threshold, for example 2°, the control device, such as an ECU, sends an instruction signal to the outer electric motor for the outer armrest 300 and the inner electric motor for the inner armrest 200. Then, Step III is taken.
Step III: the outer electric motor for the outer armrest 300 and the inner electric motor for the inner armrest 200 respectively drive the outer armrest 300 and the inner armrest 200 to turn over to a horizontal position according to the instruction signal sent by the control device in Step II. In this embodiment, in the case where the automobile seat 100 is adjusted from the initial position as shown in Fig. 10 to the zero-gravity position as shown in Fig. 12, the outer electric motor and the inner electric motor may respectively drive the outer armrest 300 and the inner armrest 200 to rotate in a direction opposite to a lifting direction of the seat cushion 110, so that the outer armrest 300 and the inner armrest 200 are at least substantially kept in a horizontal position.

### Embodiment 4

Referring to Fig. 13, a schematic state view of a seat, a seat is applied in a control method for realizing an armrest angle joint adjustment. In the control method, the control device sends an instruction signal to an outer electric motor and an inner electric motor simultaneously after receiving an armrest angle joint adjustment signal, so that the inner electric motor and the outer electric motor respectively drive an inner armrest 200 and an outer armrest 300 to turn over and stop synchronously. Here, the inner armrest 200 turns over between a first position and a second position of the inner armrest. The first position of the inner armrest may be set, so that the inner armrest 200 is inclined upward, wherein an angle between the inner armrest and a horizontal plane is 5° (more precisely, +5°) in the first position. The second position of the inner armrest may be set, so that the inner armrest 200 is inclined downward, wherein an angle between the inner armrest and the horizontal plane is 15° (more precisely, -15°) in the second position. The first position of the outer armrest may be set, so that the outer armrest 300 is inclined upward, wherein an angle with the horizontal plane is 90° to 120° in the first position. The second position of the outer armrest may be set, so that the outer armrest 300 is inclined downward, wherein an angle with the horizontal plane is 15° (more precisely, -15°) in the second position. Here, the outer armrest 300 and the inner armrest 200 may be adjusted, for example, from the horizontal position to a position inclined upward relative to the horizontal plane as shown in Fig. 13.

### Embodiment 5

Now, Embodiment 5 of a control method for electrically adjusting a seat armrest according to the present invention is described with reference to Figs. 14 to 17, which is intended to realize a single armrest angle adjustment. The control method includes any one of the following items:
(1) A control device sends an instruction signal to an outer electric motor after receiving an angle adjustment signal for an outer armrest, so that the outer electric motor drives the outer armrest 300 to turn over between a first position and a second position of the outer armrest. Here, the first position of the outer armrest may be set, for example, so that the outer armrest 300 is inclined upward, wherein an angle between the outer armrest 300 and a horizontal plane is 90° to 120° in the first position. The second position of the outer armrest may be set, for example, so that the outer armrest 300 is inclined downward, wherein an angle between the outer armrest 300 and the horizontal plane is 15° in the second position. In other words, the outer electric motor for the outer armrest 300 drives the outer armrest 300 to turn over between a first position and a second position of the outer armrest according to the instruction signal sent by the control device, for example, it may be turn over to any intermediate position, for example, a position of -15° relative to the horizontal plane as shown in Fig. 14, an initial position of 0° relative to the horizontal plane as shown in Fig. 15, a position of 45° relative to the horizontal plane as shown in Fig. 16, or a position of 90° relative to the horizontal plane as shown in Fig. 17. The initial position of the outer armrest 300 may be a horizontal position of the outer armrest 300.
(2) A control device sends an instruction signal to an inner electric motor after receiving an angle adjustment signal for an inner armrest, so that the inner electric motor drives the inner armrest 200 to turn over between a first position and a second position of the inner armrest. In other words, the inner electric motor for the inner armrest 200 drives the inner armrest 200 to turn over between the first position and the second position of the inner armrest according to the instruction signal sent by the control device, for example, it may be turn over to any intermediate position, for example, a position of -15° relative to the horizontal plane as shown in Fig. 14, or a position of 5° inclined upwards relative to the horizontal plane as shown in Fig. 13. The initial position of the inner armrest 200 may be a horizontal position of the inner armrest 200.

It is to be noted that, the terms used here are only intended for the purpose of describing specific aspects, rather than limiting the disclosure. As used here, the singular forms "a" and "the" shall include plural forms unless the context clearly states otherwise. It may be understood that the terms "including" and "comprising" as well as other similar terms, when used in the application documents, specify the existence of the stated operations, elements and/or components, but do not exclude the existence or addition of one or more other operations, elements, components and/or combinations thereof. The terms "and/or" as used herein include all arbitrary combinations of one or more related items as listed. In the description of the accompanying drawings, the same elements are always presented by the same reference signs.

The thickness of elements in the accompanying drawings may be exaggerated for the sake of clarity. In addition, it may be understood that if an element is referred to as being located on another element, coupled with another element or connected with another element, the element may be directly formed on, coupled with or connected with the other element, or there may be one or more intermediate elements therebetween. On the contrary, if the expressions "directly located on", "directly coupled with" and "directly connected with" are used here, it means that there are no intermediate elements. Other words for describing a relationship between elements should be interpreted similarly, for example, "between" and "directly between", "attached" and "directly attached", "adjacent" and "directly adjacent" and so on.

Terms such as "top", "bottom", "over", "under", "above" and "below" are used here to describe a relationship of one element, layer or area relative to another element, layer or area shown in the accompanying drawings. It may be understood that, these terms should also contain other orientations of the device in addition to the orientations described in the accompanying drawings.

It will be understood that although the terms such as "first" and "second" may be used here to describe different elements, these elements should not be limited by these terms. These terms are only used to distinguish one element from another element. Therefore, the first element may be referred to as the second element without departing from the teaching of the present inventive concept.

It may also be contemplated that, all the exemplary embodiments disclosed here may be arbitrarily combined with each other. Finally, it is to be pointed out that, the above-described embodiments are only intended for understanding the present invention, rather than limiting the protection scope of the present invention. For those skilled in the art, modifications may be made on the basis of the above-described embodiments, without departing from the protection scope of the present invention.

## Claims

1. A control method for electrically adjusting a seat armrest for an angle control of the seat armrest, **characterized in that**, the control method comprises:
- providing a seat, especially a vehicle seat, such as an automobile seat, wherein the seat has a seat cushion (110) with an electrically adjustable angle, and the seat has an outer armrest (300) which is coupled with the seat cushion and is arranged on one side proximate to a vehicle door and/or an inner armrest (200) which is coupled with the seat cushion and is arranged on one side remote from the vehicle door;
- providing a control device, wherein the controller receives a trigger signal, perform determination on the basis of the received trigger signal, and sends, according to a determination result, an instruction signal to an inner electric motor for driving the inner armrest and/or an outer electric motor for driving the outer armrest, so as to drive the inner armrest and/or the outer armrest to turn over.

2. The control method for electrically adjusting a seat armrest as recited in claim 1, **characterized in that**, the seat has the outer armrest and the inner armrest, wherein the control device sends an instruction signal to the inner electric motor and/or the outer electric motor according to the determination result, so as to
- drive the inner armrest or the outer armrest to turn over individually; or
- drive the inner armrest and the outer armrest to turn over simultaneously.

3. The control method for electrically adjusting a seat armrest as recited in claim 1 or 2, **characterized in that**, the trigger signal includes at least one of the following signals: a vehicle door outside opening signal, a vehicle door inside opening signal, a seat cushion angle adjustment signal, an outer armrest angle adjustment signal, an inner armrest angle adjustment signal, an armrest angle joint adjustment signal, an SBR sensor signal, a safety belt latch sensor signal and a seat position signal.

4. The control method for electrically adjusting a seat armrest as recited in any one of claims 1 to 3, **characterized in that**, the control method is implemented to realize a welcome mode of the seat armrest of an automobile seat, wherein the control method comprises the following steps:
Step 1: the control device receives a vehicle door outside opening signal, and then determines whether there is currently a passenger on the automobile seat, preferably by identifying an SBR sensor signal and a safety belt latch sensor signal;
Step 2: if the control device determines that there is currently a passenger on the automobile seat, preferably according to the SBR sensor signal and the seatbelt latch sensor signal, the process is ended; and if the control device determines that there is currently no passenger on the automobile seat, the control device identifies a seat position signal to determine whether the automobile seat is currently in an initial position;
Step 3: if the control device determines that the automobile seat is currently not in the initial position according to the seat position signal, the control device sends an instruction signal to an electric motor for driving the automobile seat, so as to drive and adjust the automobile seat to the initial position;
Step 4: the control device sends an instruction signal to an outer electric motor, so that the outer electric motor drives the outer armrest to turn over from the initial position of the outer armrest to a set position, and the control device identifies that the outer armrest reaches the set position, and then determines whether there is currently a passenger on the automobile seat again, preferably by recognizing the SBR sensor signal and the seatbelt latch sensor signal;
Step 5: if the control device determines that there is currently no passenger on the automobile seat, the control device doesn't send an instruction signal, so that the outer armrest is held in the set position to wait for a passenger to get on; and if the control device determines that there is currently a passenger on the automobile seat, the control device sends an instruction signal to the outer electric motor, so that the outer electric motor drives the outer armrest back to the initial position, and the process is ended.

5. The control method for electrically adjusting a seat armrest as recited in claim 4, **characterized in that**, in Step 5, before a passenger gets on, preferably wherein the control device identifies the SBR sensor signal and the seatbelt latch sensor signal in real time, if a waiting time for the passenger to get on exceeds a set time, the control device sends an instruction signal to the outer electric motor, so that the outer electric motor drives the outer armrest back to the initial position, and the process is ended; and if the waiting time for the passenger to get on doesn't exceed the set time, but the control device receives a door closing signal, the control device sends an instruction signal to the outer electric motor, so that the outer electric motor drives the outer armrest back to the initial position, and the process is ended.

6. The control method for electrically adjusting a seat armrest as recited in any one of claims 1 to 5, **characterized in that**, the control method is implemented to realize a see-off mode of the seat armrest of an automobile seat, wherein the control method comprises the following steps:
Step A: the control device receives a vehicle door inside opening signal, and then determines whether there is currently a passenger on the automobile seat, preferably by identifying an SBR sensor signal and a safety belt latch sensor signal;
Step B: if the control device determines that there is currently no passenger on the automobile seat, preferably according to the SBR sensor signal and the seatbelt latch sensor signal, the process is ended; and if the control device determines that there is currently a passenger on the automobile seat, the control device identifies a seat position signal to determine whether the automobile seat is currently in an initial position;
Step C: if the control device determines that the automobile seat is currently not in the initial position according to the seat position signal, the control device sends an instruction signal to an electric motor for driving the automobile seat, so as to drive and adjust the automobile seat to the initial position;
Step D: the control device sends an instruction signal to the outer electric motor, so that the outer electric motor drives the outer armrest to turn over from an initial position of the outer armrest to a set position, and the control device identifies that the outer armrest reaches the set position, and then determines whether there is currently a passenger on the automobile seat again, preferably by recognizing the SBR sensor signal and the seatbelt latch sensor signal;
Step E: if the control device determines that there is currently a passenger on the automobile seat, the control device doesn't send an instruction signal, so that the outer armrest is held in the set position to wait for a passenger to get off; and if the control device determines that there is currently no passenger on the automobile seat, the control device sends an instruction signal to the outer electric motor, so that the outer electric motor drives the outer armrest back to the initial position, and the process is ended.

7. The control method for electrically adjusting an automobile seat armrest as recited in claim 6, **characterized in that**, in Step E, before a passenger gets off, preferably wherein the control device identifies the SBR sensor signal and the seatbelt latch sensor signal in real time, if a waiting time for a passenger to get off exceeds a set time, the control device sends an instruction signal to the outer electric motor, so that the outer electric motor drives the outer armrest back to the initial position, and the process is ended; and if the waiting time for the passenger to get off doesn't exceed the set time, but the control device receives a door closing signal, the control device sends an instruction signal to the outer electric motor, so that the outer electric motor drives the outer armrest back to the initial position, and the process is ended.

8. The control method for electrically adjusting a seat armrest as recited in any one of claims 4 to 7, **characterized in that**, the initial position of the seat comprises a horizontal position of the outer armrest.

9. The control method for electrically adjusting a seat armrest as recited in any one of claims 4 to 8, **characterized in that**, the set position is set, so that the outer armrest defines an angle in a range of 90° to 120° relative to a horizontal plane in the set position.

10. The control method for electrically adjusting a seat armrest as recited in any one of claims 4 to 9, **characterized in that**, the set time is in a range of 30s to 60s.

11. The control method for electrically adjusting a seat armrest as recited in any one of claims 1 to 10, **characterized in that**, the control method is implemented to realize a single armrest angle adjustment, wherein:
- the control device receives an angle adjustment signal for the outer armrest, and then sends an instruction signal to the outer electric motor, so that the outer electric motor drives the outer armrest to turn over between a first position and a second position of the outer armrest; or
- the control device receives an angle adjustment signal for the inner armrest, and then sends an instruction signal to the inner electric motor, so that the inner electric motor drives the inner armrest to turn over between a first position and a second position of the inner armrest.

12. The control method for electrically adjusting a seat armrest as recited in claim 11, **characterized in that**, the first position of the outer armrest is set, so that the outer armrest is inclined upward, preferably wherein an angle between the outer armrest and a horizontal plane is 90° to 120° in the first position; and/or the second position of the outer armrest is set, so that the outer armrest is inclined downward, preferably wherein an angle between the outer armrest and a horizontal plane is 15° in the second position.

13. The control method for electrically adjusting a seat armrest as recited in claim 11 or 12, **characterized in that**, the first position of the inner armrest is set, so that the inner armrest is inclined upward, preferably wherein an angle between the inner armrest and a horizontal plane is 5° in the first position; and/or the second position of the inner armrest is set, so that the inner armrest is inclined downward, preferably wherein an angle between the inner armrest and a horizontal plane is 15° in the second position.

14. The control method for electrically adjusting a seat armrest as recited in any one of claims 1 to 13, **characterized in that**, the control method is implemented to realize an armrest angle joint adjustment, wherein the control device receives an armrest angle joint adjustment signal, and then sends an instruction signal to the outer electric motor and the inner electric motor simultaneously, so that the inner electric motor and the outer electric motor respectively drive the inner armrest and the outer armrest to turn over and stop synchronously.

15. The control method for electrically adjusting a seat armrest as recited in any one of claims 1 to 14, **characterized in that**, the control method is implemented to realize a horizontal mode of the seat armrest, wherein the control method comprises the following step:
the control device receive an adjustment signal for a seat cushion angle, and then identifies a change of the seat cushion angle, wherein, if the change of the seat cushion angle is less than a set angle, the process is ended; and if the change of the seat cushion angle is greater than the set angle, the control device sends an instruction signal to the outer electric motor and/or the inner electric motor, so that the outer electric motor and/or the inner electric motor respectively drive the outer armrest and/or the inner armrest to turn over to a horizontal position.

16. The control method as recited in claim 15, **characterized in that**, the set angle is 2°.

17. A seat, especially a vehicle seat, such as an automobile seat, comprising a seat cushion (110) with an electrically adjustable angle, **characterized in that**, the seat further comprises:
- an outer armrest (300) and an outer electric motor for driving the outer armrest, wherein the outer armrest is coupled with the seat cushion, has an electrically adjustable angle relative to the seat cushion, and is arranged on one side proximate to a vehicle door; and/or
- an inner armrest (200) and an inner electric motor for driving the inner armrest, wherein the inner armrest is coupled with the seat cushion, has an electrically adjustable angle relative to the seat cushion, and is arranged on one side remote from the vehicle door; and
- a control device configured to implement the control method for electrically adjusting a seat armrest as recited in any one of claims 1 to 16.

18. A control device comprising a nonvolatile memory on which control instructions are stored, wherein the control instructions are configured to implement the control method for electrically adjusting a seat armrest as recited in any one of claims 1 to 16 when the control instructions are executed in the control device.
